# EUROPEAN PATENT SPECIFICATION

(11) **EP 3 508 333 B1**
(45) Date of publication and mention of the grant of the patent: **03.05.2023**
(21) Application number: 18150788.0
(22) Date of filing: 09.01.2018
(51) Int. Cl.: B29C 64/386, B33Y 99/00, B33Y 50/00, B22F 12/80, B29C 64/153, B22F 10/28, B22F 10/80, B22F 12/90, B29C 64/165

(54) **PLANT COMPRISING AT LEAST ONE APPARATUS FOR ADDITIVELY MANUFACTURING OF THREE-DIMENSIONAL OBJECTS**
ANLAGE MIT MINDESTENS EINER VORRICHTUNG ZUR GENERATIVEN FERTIGUNG VON DREIDIMENSIONALEN OBJEKTEN
INSTALLATION COMPRENANT AU MOINS UN APPAREIL DE FABRICATION ADDITIVE D'OBJETS TRIDIMENSIONNELS

(43) Date of publication of application: 10.07.2019
(73) Proprietor: Concept Laser GmbH, 96215 Lichtenfels (DE)
(72) Inventor: Vierling, Christoph, 96237 Ebersdorf bei Coburg (DE)
(74) Representative: Hafner & Kohl PartmbB

(56) References cited:
- WO-A2-2014/131025
- US-A1- 2003 105 538
- US-A1- 2016 335 708
- US-A1- 2017 246 798
- SLAWOMIR KLOS ET AL: "The Impact of ERP on Maintenance Management", MANAGEMENT AND PRODUCTION ENGINEERING REVIEW, vol. 4, no. 3, 30 September 2013 (2013-09-30), XP055489658, ISSN: 2080-8208, DOI: 10.2478/mper-2013-0024

## Description

The invention relates to a plant, comprising at least one apparatus for additively manufacturing of three-dimensional objects by means of successive layerwise selective irradiation and consolidation of layers of a build material which can be consolidated by means of an energy source, wherein the plant comprises at least one operable component.

Thus, the invention relates to a plant that comprises one or more apparatuses for additively manufacturing of three-dimensional objects, wherein the plant may additionally comprise an arbitrary number of other apparatuses that are not necessarily provided for additive manufacturing, for example but not limited to manufacturing apparatuses, e.g. production lines. Therefore, the plant comprises at least one operable component that may be a component of the at least one apparatus for additively manufacturing of three-dimensional objects or any other arbitrary component of the plant, e.g. a technical component of a manufacturing apparatus of the plant, such as a production line.

Such plants comprising one or multiple apparatuses are generally known from prior art. Typically, each of the apparatuses that is assigned to the plant comprises a plurality of (technical) components that are used during the operation of the respective apparatus. Due to the operation of the apparatus the service life or the tool life, respectively, of some components or of at least one component of the plant may be limited. Hence, at least one component of the plant may malfunction or fail, e.g. due to wear occurring during the operation of the plant.

As it is known from prior art, a respective component which suffers a failure or a malfunction has to be replaced or repaired for the plant to stay operable or for the plant to become operable again. Usually, a plant operator keeps a component warehouse or a component storage, respectively, in which various components that may malfunction or break during the operation of the plant are stored, wherein a malfunctioning component or a broken component may be replaced with a corresponding component stored in the warehouse or the storage. Often, components may not be commercially available over the whole lifetime of the plant, wherein it is necessary to manufacture the respective component or have the respective component individually manufactured. In those cases it is necessary to provide component data, for example three-dimensional data of the component that allows manufacturing component.

Respective component data may not always be available and available component data may be corrupt and have to be corrected for the respective component to be manufactured. Thus, ensuring that a respective plant can be kept operable by providing a component warehouse or acquiring the component data can be cumbersome and time-consuming. Further, after a respective component malfunctions or fails, a downtime of the respective apparatus of the plant occurs until a respective component is available for replacement or has been replaced, respectively.

The document US 2016 335 708 A1 discloses a method for on-demand manufacturing comprising a digital part library configured to store manufacturing information for parts to be manufactured. A part can be manufactured based on an order for manufacturing the part. From US 2003 105 538 A1 a system for rapid manufacturing aerospace replacement parts is known, wherein a part to be manufactured is placed in a three-dimensional scanning device for developing a three-dimensional scan. The aerospace replacement part can be manufactured based on the three-dimensional scan.

Thus, it is an object of the present invention to provide a plant, wherein the operability or reparability is improved and wherein in particular downtimes of the plant can be reduced.

The object is inventively achieved by a plant according to claim 1, and by a method according to claim 11. Advantageous embodiments of the invention are subject to the dependent claims.

As described before, the plant described herein, inter alia, comprises at least one apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective additive manufacturing apparatus can be a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The additive manufacturing apparatus may comprise a number of functional units which are used during its operation. Exemplary functional units are a process chamber, an irradiation device which is adapted to selectively irradiate a build material layer disposed in the process chamber with at least one energy beam, and a stream generating device, which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the inventive plant comprises at least one apparatus for additively manufacturing of three-dimensional objects, wherein objects may be additively manufactured by means of successive layerwise selective irradiation and consolidation of layers of the build material which can be consolidated by means of an energy source. In other words, the at least one apparatus the plant comprises may manufacture three-dimensional objects in a layerwise successive manner, for example by selective laser sintering or selective laser melting of layers of build material arranged in a build plane. Besides, the inventive plant may comprise other apparatuses, e.g. regular manufacturing apparatuses that do not necessarily have to be adapted for additive manufacturing process, such as regular production lines.

The invention is based on the idea that a determination unit is provided that is adapted to determine component data relating to at least one component of the plant, wherein a data storage is provided for storing the component data, wherein the at least one apparatus is adapted to manufacture the at least one component based on the component data. Thus, it is possible to determine the component data of at least one (technical) component that is used during the operation of the plant, wherein for the determination of the component data the determination unit of the plant is used. After the component data of the respective component of the plant have been determined, the component data may be stored in a data storage provided for storing the component data. Subsequently, the at least one apparatus for additively manufacturing of three-dimensional objects is adapted to manufacture the at least one component based on the component data. The respective component may be an arbitrary component of the plant, e.g. of the at least one additive manufacturing apparatus or of another apparatus of the plant.

For example, if at least one operable component of the plant malfunctions or fails, or a failure of the respective component is imminent, the at least one additive manufacturing apparatus is used to manufacture the respective component. Thus, the component of the plant may be replaced with the component that has been additively manufactured via the at least one additive manufacturing apparatus. Thus, it is not necessary for a plant operator to keep a component warehouse or a component storage, in which various (in particular all) components of the plant are stored. It is also not necessary to obtain component data for a failed or malfunctioning component of the plant. Instead, the respective component can be manufactured with the at least one additive manufacturing apparatus that is assigned to the plant, wherein the additive manufacturing process is performed based on the component data that have previously been determined via the determination unit and that are stored within the data storage assigned to the plant. Again, the operable component may be any component of the plant, e.g. a component of the at least one apparatus for additively manufacturing three-dimensional objects or any other apparatus assigned to the plant.

Therefore, downtimes of the plant (or at least one apparatus assigned to the plant) may significantly be reduced, as the new component that is required as a spare part for replacing the malfunctioning or failing component of the plant, can additively be manufactured according to the component data that have previously been determined and stored in the data storage. Thus, the provision of spare parts is ensured and the plant operator does not have to keep a component warehouse or a component storage, respectively.

The component data may be or may comprise
- at least one geometrical parameter of at least one component and/or
- at least one chemical parameter of at least one component and/or
- at least one physical parameter of at least one component.

Thus, the component data that is determined via the determination unit assigned to the plant may contain information relating to at least one geometrical parameter of the at least one component. The geometrical parameter may, for example, relate to three-dimensional data, such as CAD-data (computer aided design), preferably defining the (three-dimensional) geometry of the component, such as a surface and/or a structure of the respective component, preferably an out surface and an inner structure of the object.

Besides or additionally, the component data may be or may comprise a chemical parameter of at least one component. The chemical parameter may refer to the chemical composition of the component, e.g. the material the component consists of. Thus, a selection of the build material(s) used in the additive manufacturing process can be made. Further, the component data may be or may comprise at least one physical parameter of the at least one component. The physical parameter may relate to mechanical properties of the component, such as a mass and/or a density or various other mechanical properties, such as an elastic modulus or the like. By having the respective parameters considered in the determination of the component data, it is possible to additively manufacture a (exact) reproduction of the at least one component of the plant that malfunctions or fails. The additively manufactured component may replace the broken/malfunctioning component, wherein the spare component comprises all relevant features of the original component, such as a chemical feature and/or a geometrical feature and/or a physical feature defined by the respective corresponding parameter(s).

The determination unit that is assigned to the plant may comprise at least one optical determination element, in particular at least one three-dimensional scanner and/or at least one x-ray determination element, and/or at least one tactile determination element and/or at least one acoustic determination element, in particular an ultrasound determination element. The determination of the component data may therefore, be performed optically and/or tactilely and/or acoustically. Further, it is possible to combine at least two different determination methods, wherein for example one method relates to the outer dimensions of the component, such as a tactile determination, and at least one determination method that allows for a determination of the inner structure of the component, such as an x-ray determination and/or an ultrasound determination, for instance. Hence, component data relating to the geometry of the respective component may be determined.

Thus, it is possible to determine (generate) component data for the respective component via the determination unit, wherein the component data can be stored in the data storage and used to control the additive manufacturing process, if the corresponding determined component the component data have been generated for is about to fail, fails or malfunctions.

The determination unit can be connected or connectable with the at least one apparatus for additively manufacturing of three-dimensional objects or can be integrated in the structure of the additive manufacturing apparatus, respectively. Preferably, the various components of the plant are determined via the determination unit and component data are generated, accordingly. Preferably, the data storage may be adapted to store the component data that have been determined via the determination unit. Thus, the data storage can store the component data of the respective components, for example components that are likely to fail due to wear and have to be replaced periodically. Of course, it is also possible to repair broken components via the additive manufacturing process, in particular via hybrid additive manufacturing. Thus, a broken part of the component may be manufactured onto the broken component or a broken part of the component may be replaced by a corresponding part built in an additive (hybrid) manufacturing process.

A control unit is provided that is adapted to control the at least one apparatus for additively manufacturing of three-dimensional objects, wherein at least one component is built based on corresponding component data stored in the data storage dependent on at least one maintenance parameter. Thus, according to the maintenance parameter a decision can be made whether a component needs to be replaced and which component should be manufactured via the additive manufacturing apparatus. The maintenance parameter indicates whether it is necessary for a component of the plant to be replaced or whether the respective component is (fully) operable and therefore, does not have to be replaced.

It is, for example, possible that the maintenance parameter indicates a defined probability of failing for at least one component. Thus, it is possible to have a defined value for the maintenance parameter above which (or below which) a replacement of the respective component is deemed necessary to ensure that a failed or malfunctioning component can be replaced in good time.

Preferably, the control unit may be adapted to determine the at least one maintenance parameter. For example, it is possible to have a separate unit for determining the maintenance parameter and send the maintenance parameter to the control unit or the respective component may be deemed as part of the control unit. It is also possible to have the control unit itself be adapted to determine the at least one maintenance parameter. The control unit may, for instance, monitor various components of the plant regarding their maintenance parameter. This allows for observing or monitoring the components during the operation of the plant ensuring that all components of the plant remain operable at least to a defined degree.

The at least one maintenance parameter preferably relates to a status of at least one component of the plant, in particular to an operability of a corresponding component. Thus, by means of the maintenance parameter, a decision can be made, whether the component of the plant is operable or whether a replacement of the component is or becomes necessary. The maintenance parameter in a simple example may only take two values, wherein the component may be deemed as operable or not operable. But, as described before, the maintenance parameter may also comprise information regarding a probability of a currently operable component becoming malfunctioning or inoperable.

According to another embodiment of the present invention, the control unit may be adapted to control the at least one additive manufacturing apparatus dependent on the maintenance parameter, wherein the apparatus may be used to manufacture at least one component dependent on the maintenance parameter. Thus, the additive manufacturing process can be performed to manufacture a respective component of the plant, if the maintenance parameter indicates that a replacement or repair, respectively, of the respective component is or becomes necessary.

Preferably, the maintenance parameter may relate to an imminent failure and/or an actual failure of the at least one component, wherein the control unit may be adapted to control the additive manufacturing apparatus dependent on the maintenance parameter in that the component is additively manufactured, in particular before a (complete) failure of the at least one component occurs. According to this embodiment, the maintenance parameter may relate to the failure of the at least one component of the plant, in particular to an imminent failure. In other words, the maintenance parameter may indicate that a respective component is about to fail (in the near future). Advantageously, the control unit may be adapted to control an additive manufacturing process to have a corresponding component additively manufactured, before the component that needs to be replaced ultimately fails. Thus, a downtime of the plant (or at least the part thereof that comprises the failing component) can be reduced, as an imminent failure of the at least one component can be predicted and a corresponding component for the replacement of the failing component can be manufactured in advance to the failure of the component. Thus, the replacement component may already be available when the original component fails. Preferably, it is even possible to replace the failing component before the failure occurs, to prevent other components of the plant from being damaged due to the failure of the failing component.

The control unit is adapted to change component data stored in the data storage. Thus, it is possible to change or amend component data that is stored in the data storage, for example to take into calculation that at least one component of the plant may be changed or that advantageous changes of the component can be made, for example to reduce wear or enhance the service life of the respective components. It is also possible that the control unit may change the component data, if an error in the component data has been detected, for example a corrupted (CAD-) file. It is also possible to indicate, for example, a component that frequently fails, and have the control unit change the component data accordingly, to prevent or reduce the respective component to fail. Thus, the tool life of the respective component can be enhanced.

Besides, the invention relates to an apparatus for additively manufacturing of three-dimensional objects by means of successive layerwise selective irradiation and consolidation of layers of a build material which can be consolidated by means of an energy source, for a plant, as described above, wherein the apparatus is connected or connectable with a data storage containing component data relating to at least one component of the plant, wherein the at least one apparatus is adapted to manufacture the at least one component based on the component data, wherein a control unit is adapted to control the at least one apparatus, wherein at least one component is built based on corresponding component data stored in the data storage dependent on at least one maintenance parameter, wherein the control unit is adapted to amend component data stored in the data storage.

Additionally, the invention relates to an apparatus for additively manufacturing of three-dimensional objects by means of successive layerwise selective irradiation and consolidation of layers of a build material which can be consolidated by means of an energy source, for a plant, as described before, wherein the apparatus is connected or connectable with a determination unit, preferably integrated in the apparatus, adapted to determine component data relating to at least one component of the plant and/or the apparatus, wherein a data storage is provided for storing the component data, wherein the at least one apparatus is adapted to manufacture the at least one component based on the component data, wherein a control unit is adapted to control the at least one apparatus, wherein at least one component is built based on corresponding component data stored in the data storage dependent on at least one maintenance parameter, wherein the control unit is adapted to amend component data stored in the data storage.

Further, the invention relates to a method for operating an inventive plant comprising at least one apparatus for additively manufacturing three-dimensional objects by means of successive layerwise selective irradiation and consolidation of layers of a build material which can be consolidated by means of an energy source, wherein component data relating to at least one component of the plant are determined and stored in a data storage, wherein the at least one apparatus is used to manufacture the at least one component based on the component data, wherein at least one component is built based on corresponding component data stored in the data storage dependent on at least one maintenance parameter, wherein component data stored in the data storage are amended via a control unit.

According to a first embodiment of the inventive method, component data of at least one component of the plant are determined and stored in a data storage, wherein a corresponding component is additively manufactured by the at least one apparatus dependent on a maintenance parameter. As described before, the at least one maintenance parameter preferably may relate to a status of at least one component of the plant, in particular to an operability of a corresponding component. Thus, by means of the maintenance parameter, a decision can be made, whether the component of the plant is operable or whether a replacement of the component is necessary. The maintenance parameter according to a simple example may only take two values, wherein the component may be deemed as operable or not operable. But, as described before, the maintenance parameter may also comprise information regarding a probability of a currently operable component becoming malfunctioning or inoperable.

Further, a component of the plant may be automatically additively manufactured based on the component data via the at least one apparatus, if a corresponding component of the plant is determined to become and/or to be inoperable. Thus, the maintenance parameter may relate to an imminent failure and/or an actual failure of the at least one component, wherein a control unit may be adapted to control the additive manufacturing apparatus dependent on the maintenance parameter in that the component is additively manufactured, in particular before the (complete) failure of the at least one component occurs.

According to this embodiment, the maintenance parameter may relate to the failure of the at least one component of the plant, in particular to an imminent failure. In other words, the maintenance parameter may indicate that a respective component is about to fail (in the near future). Advantageously, the additive manufacturing process may be performed to have a corresponding component additively manufactured as a replacement component before the component that needs to be replaced ultimately fails.

Thus, a downtime of the plant (or at least the part thereof that comprises the failing component) can be reduced, as an imminent failure of the at least one component can be predicted and a corresponding component for the replacement of the failing component can be manufactured in advance to the failure of the component. Thus, the replacement component may already be available when the original component fails. Preferably, it is even possible to replace the failing component before the failure occurs, e.g. to prevent other components of the plant from being damaged due to the failure of the failing component.

Self-evidently, all details, features and advantages described with respect to the inventive plant are fully transferable to the inventive apparatus and the inventive method for operating a plant.

Exemplary embodiments of the invention are described with reference to the Fig. The Fig. are schematic diagrams, wherein
- Fig. 1: shows an inventive plant according to a first embodiment; and
- Fig. 2: shows an inventive plant according to a second embodiment.

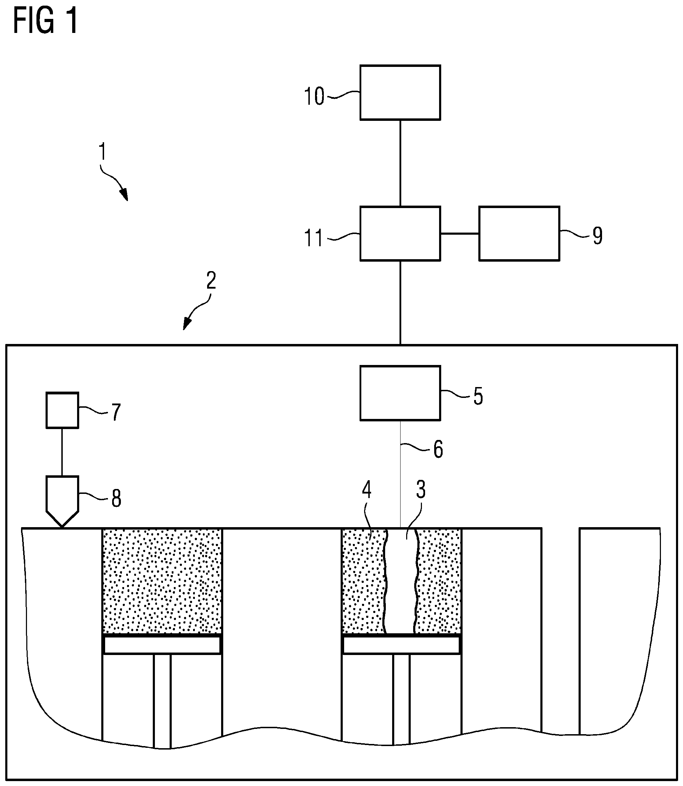

Fig. 1 shows a plant 1, comprising an apparatus 2 for additively manufacturing of three-dimensional objects 3 by means of successive layerwise selective irradiation and consolidation of layers of a build material 4 which can be consolidated by means of an energy source, for example a laser 5 generating a laser beam 6. The apparatus 2 comprises an operable component 7, for example a component 7 of the drive device of an application unit 8. Of course, the plant 1 and the apparatus 2 may comprise a plurality of (technical) components 7, wherein the component 7 stands as an example for an arbitrary number of different components 7.

The plant 1 further comprises a determination unit 9, for example comprising a three-dimensional scanner and an x-ray element, that is adapted to determine component data relating to the component 7 of the plant 1. The determination unit 9 may therefore, determine various parameters that are contained in the component data, such as a geometrical parameters, chemical parameters and physical parameters of each corresponding component 7. For example, the determination unit 9 determines the geometrical data of the component 7 and the inner structure of the component 7 and generates CAD-data relating to the outer surface and the inner structure of the component 7. Further, the determination unit 9 determines mechanical properties and a chemical composition of the component 7 to determine which build material 4, for example aluminum, has to be used to additively build the component 7.

The plant 1 further comprises a data storage 10 adapted to receive and store the component data determined via the determination unit 9. Thus, the data storage 10 is connected or connectable with the determination unit 9 directly or indirectly, in that the determined component data can be transferred/sent to the data storage 10 in which they can be stored. Preferably, the data storage 10 comprises component data of various components 7, in particular all components 7 of the plant 1, in particular the apparatus 2, that are likely to fail over the lifetime due to wear, for instance.

Additionally, the plant 1 comprises a control unit 11 that is adapted to control the apparatus 2 in particular a manufacturing process performed using the apparatus 2. Hence, the control unit 11 can control the apparatus 2 in that an object 3 is additively manufactured to be used as component 7 in the plant 1. To manufacture a respective component 7, the control unit 11 can access the data storage 10 to look up the corresponding component data describing the component 7 that has to be manufactured. Of course, it is possible that the respective component data are sent from the data storage 10 to the control unit 11. Based on the component data a component 7 can be manufactured to replace a corresponding failing component 7.

Besides, it is also possible that the control unit 11 is adapted to determine a maintenance parameter of the component 7, which maintenance parameter relates to a status of the component 7, in particular relating to an operability of the component 7. For example, the maintenance parameter may comprise information on whether the component 7 is operable or not operable and/or the maintenance parameter may indicate a probability of failing of the component 7. Thus, based on the maintenance parameter a decision can be made on whether the component 7 has to be replaced instantly or in the near future. Thus, it is possible to prevent the failing component 7 from influencing other components 7 of the apparatus 2 or the plant 1, respectively.

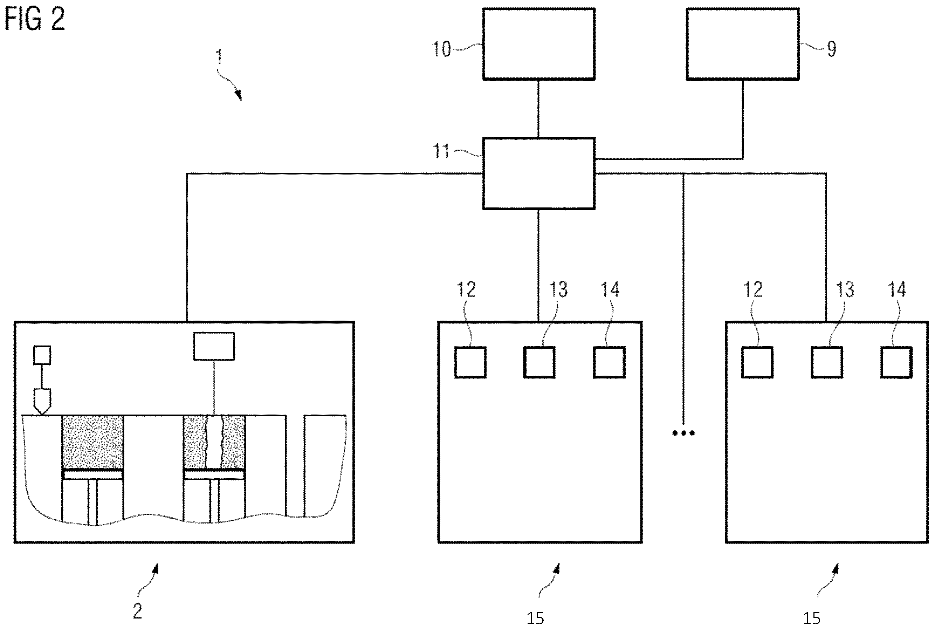

As will be described with respect to Fig. 2, the plant 1 may comprise a plurality of apparatuses 15 besides the additive manufacturing apparatus 2. In fact, the plant 1 may comprise at least one apparatus 15 that is not an additive manufacturing apparatus 2 or the at least one apparatus 15 maybe an additive manufacturing apparatus 2, as well. In other words, the plant 1 may comprise a plurality of apparatuses, wherein at least one apparatus is an additive manufacturing apparatus 2, as described before. The at least one other apparatus 15 may be a regular manufacturing apparatus. In the exemplary embodiment depicted in Fig. 2, the plant 1 comprises multiple apparatuses 15 that are built as (regular) manufacturing apparatuses, for example as production lines. The apparatuses 15 may be built as the same apparatuses 15 or as different apparatuses 15. Each apparatus 15 comprises a plurality of components 12 - 14, wherein again, the components 12 - 14, may be the same components 12 - 14 or the apparatuses 15 may comprise different components 12 - 14.

Again, the plant 1 comprises a determination unit 9 and a data storage 10, as described before. Thus, reference is made to the description of the function of the various devices, such as the determination unit 9 and the data storage 10 with respect to Fig. 1. The plant 1 depicted in Fig. 2 further comprises a control unit 11 that is adapted to control the apparatus 2, as also already described before. The control unit 11 is further adapted to determine the maintenance parameter of the components 12 - 14 of the individual apparatuses 15.

If the control unit 11 determines that one of the components 12 - 14 is probable to fail or already failed, the control unit 11 may control the apparatus 2 to perform an additive manufacturing process in that a respective component 12 - 14 is manufactured to replace the broken component 12 - 14 in the corresponding apparatus 15. To provide the component data the execution of the additive manufacturing process is based on, the determination unit 9 is adapted to determine the component data of the components 12 - 14. The component data of the components 12 - 14 are stored in the data storage 10 and the component data stored in the data storage 10 are accessible to the control unit 11.

Accordingly, a component 7 and/or a component 12 - 14 the control unit 11 has determined to have failed or determined to probably fail in a predefined time range can be manufactured, using the additive manufacturing apparatus 2. Advantageously, it is possible that a component storage in which the component(s) 7, 12 - 14 are stored can be omitted. The component data for the respective components 7, 12 - 14 are stored in the data storage 10, wherein the component data have been determined via the determination unit 9.

Of course, all details, features and advantages described with respect to the individual embodiments are fully transferrable and exchangeable. Self-evidently, the inventive method may be performed on the inventive plant 1, in particular, the inventive plant 1 may be operated using the inventive method.

## Claims

1. Plant (1), comprising at least one apparatus (2) for additively manufacturing of three-dimensional objects (3) by means of successive layerwise selective irradiation and consolidation of layers of a build material (4) which can be consolidated by means of an energy source (5), wherein the plant (1) comprises at least one operable component (7, 12 - 14), and a determination unit (9) adapted to determine component data relating to at least one component (7, 12 - 14) of the plant (1), wherein a data storage (10) is provided for storing the component data, wherein the at least one apparatus (2) is adapted to manufacture the at least one component (7, 12 - 14) based on the component data, wherein a control unit (11) is adapted to control the at least one apparatus (2), wherein at least one component (7, 12 - 14) is built based on corresponding component data stored in the data storage (10) dependent on at least one maintenance parameter, wherein the control unit (11) is adapted to amend component data stored in the data storage (10).

2. Plant according to one claim 1, **characterized in that** the component data is or comprises
- at least one geometrical parameter of at least one component (7, 12 - 14) and/or
- at least one chemical parameter of at least one component (7, 12 - 14) and/or
- at least one physical parameter of at least one component (7, 12 - 14).

3. Plant according to claim 1 or 2, **characterized that** the determination unit (9) comprises at least one optical determination element, in particular a three-dimensional scanner and/or at least one x-ray determination element, and/or at least one tactile determination element and/or at least one acoustic determination element, in particular an ultra sound determination element.

4. Plant according to one of the preceding claims, **characterized that** the data storage (10) is adapted to store component data determined via the determination unit (9).

5. Plant according to one of the preceding claims, **characterized in that** the control unit (11) is adapted to determine the at least one maintenance parameter.

6. Plant according to one of the preceding claims, **characterized in that** the at least one maintenance parameter relates to a status of at least one component (7, 12 - 14) of the plant (1), in particular to an operability of a corresponding component (7, 12 - 14).

7. Plant according to one of the preceding claims, **characterized in that** the control unit (11) is adapted to control the at least one apparatus (2) dependent on the maintenance parameter, wherein the apparatus (2) is used to manufacture at least one component (7, 12 - 14) dependent on the maintenance parameter.

8. Plant according to one of the preceding claims, **characterized in that** the maintenance parameter relates to an imminent failure and/or an actual failure of the at least one component (7, 12 - 14), wherein the control unit (11) is adapted to control the apparatus (2) dependent on the maintenance parameter **in that** the component (7, 12 - 14) is additively manufactured, in particular before the actual failure of the at least one component (7, 12 - 14).

9. Method for operating a plant (1) comprising at least one apparatus (2) for additively manufacturing three-dimensional objects (3) by means of successive layerwise selective irradiation and consolidation of layers of a build material (4) which can be consolidated by means of an energy source (5), wherein the plant (1) comprises at least one operable component (7, 12 - 14), wherein component data relating to at least one component (7, 12 - 14) of the plant (1) are stored in a data storage (10), wherein the at least one apparatus (2) is used to manufacture the at least one component (7, 12 - 14) based on the component data, wherein at least one component (7, 12 - 14) is built based on corresponding component data stored in the data storage (10) dependent on at least one maintenance parameter, wherein component data stored in the data storage (10) are amended via a control unit (11).

10. Method according to claim 9, **characterized in that** component data of at least one component (7, 12 - 14) of the plant are determined and stored in a data storage (10), wherein a corresponding component (7, 12 - 14) is additively manufactured via the at least one apparatus (2) dependent on a maintenance parameter.

11. Method according to claim 9 or 10, **characterized in that** the maintenance parameter relates to a status of at least one component (7, 12 - 14) of the plant (1), in particular to an operability of a corresponding component (7, 12 - 14).

12. Method according to one of the claims 9 to 11, **characterized in that** a component (7, 12 - 14) of the plant (1) is automatically additively manufactured based on the component data via the at least one apparatus (2), if a corresponding component (7, 12 - 14) of the plant (1) is determined to become and/or to be inoperable.

## Patentansprüche

1. Anlage (1), aufweisend zumindest eine Vorrichtung (2) zur additiven Fertigung von dreidimensionalen Objekten (3) durch sukzessives schichtweises selektives Bestrahlen und Verfestigen von Schichten eines vermittels einer Energiequelle (5) verfestigbaren Baumaterials (4), wobei die Anlage (1) zumindest ein betriebsfähiges Bauteil (7, 12 - 14) aufweist, sowie eine Bestimmungseinheit (9), die eingerichtet ist, Bauteildaten bezüglich zumindest eines Bauteils (7, 12 - 14) der Anlage (1) zu bestimmen, wobei ein Datenspeicher (10) zum Speichern der Bauteildaten vorgesehen ist, wobei die zumindest eine Vorrichtung (2) eingerichtet ist, das zumindest eine Bauteil (7, 12 - 14) basierend auf den Bauteildaten zu fertigen, wobei eine Steuereinheit (11) eingerichtet ist, die zumindest eine Vorrichtung (2) zu steuern, wobei zumindest ein Bauteil (7, 12 - 14) basierend auf entsprechenden in dem Datenspeicher (10) gespeicherten Bauteildaten abhängig von zumindest einem Wartungsparameter aufgebaut wird, wobei die Steuereinheit (11) eingerichtet ist, in dem Datenspeicher (10) gespeicherte Bauteildaten zu verändern.

2. Anlage nach Anspruch 1, **dadurch gekennzeichnet, dass** die Bauteildaten sind oder aufweisen:
- zumindest einen geometrischen Parameter von zumindest einem Bauteil (7, 12 - 14), und/oder
- zumindest einen chemischen Parameter von zumindest einem Bauteil (7, 12 - 14), und/oder
- zumindest einen physikalischen Parameter von zumindest einem Bauteil (7, 12 - 14).

3. Anlage nach Anspruch 1 oder 2, **dadurch gekennzeichnet, dass** die Bestimmungseinheit (9) zumindest ein optisches Erfassungselement, insbesondere einen dreidimensionalen Scanner und/oder zumindest ein Röntgenerfassungselement und/oder zumindest ein taktiles Bestimmungselement und/oder zumindest ein akustisches Bestimmungselement, insbesondere ein Ultraschallbestimmungselement, aufweist.

4. Anlage nach einem der vorstehenden Ansprüche, **dadurch gekennzeichnet, dass** der Datenspeicher (10) eingerichtet ist, über die Bestimmungseinheit (9) bestimmte Bauteildaten zu speichern.

5. Anlage nach einem der vorstehenden Ansprüche, **dadurch gekennzeichnet, dass** die Steuereinheit (11) eingerichtet ist, den zumindest einen Wartungsparameter zu bestimmen.

6. Anlage nach einem der vorstehenden Ansprüche, **dadurch gekennzeichnet, dass** der zumindest eine Wartungsparameter einen Zustand zumindest eines Bauteils (7, 12 - 14) der Anlage (1) betrifft, insbesondere eine Betriebsfähigkeit eines entsprechenden Bauteils (7, 12 - 14).

7. Anlage nach einem der vorstehenden Ansprüche, **dadurch gekennzeichnet, dass** die Steuereinheit (11) eingerichtet ist, die zumindest eine Vorrichtung (2) abhängig von dem Wartungsparameter zu steuern, wobei die Vorrichtung (2) verwendet wird, um zumindest ein Bauteil (7, 12 - 14) abhängig von dem Wartungsparameter zu fertigen.

8. Anlage nach einem der vorstehenden Ansprüche, **dadurch gekennzeichnet, dass** der Wartungsparameter einen drohenden Ausfall und/oder einen tatsächlichen Ausfall des zumindest einen Bauteils (7, 12 - 14) betrifft, wobei die Steuereinheit (11) eingerichtet ist, die Vorrichtung (2) in Abhängigkeit von dem Wartungsparameter dadurch zu steuern, dass das Bauteil (7, 12 - 14) additiv gefertigt wird, insbesondere vor dem tatsächlichen Ausfall des zumindest einen Bauteils (7, 12 - 14).

9. Verfahren zum Betreiben einer Anlage (1) aufweisend zumindest eine Vorrichtung (2) zur additiven Fertigung von dreidimensionalen Objekten (3) durch sukzessives schichtweises selektives Bestrahlen und Verfestigen von Schichten aus einem vermittels einer Energiequelle (5) verfestigbaren Baumaterial (4), wobei die Anlage (1) zumindest ein betriebsfähiges Bauteil (7, 12 - 14) aufweist, wobei Bauteildaten in Bezug auf zumindest ein Bauteil (7, 12 - 14) der Anlage (1) in einem Datenspeicher (10) gespeichert werden, wobei die zumindest eine Vorrichtung (2) zur Fertigung des zumindest einen Bauteils (7, 12 - 14) basierend auf den Bauteildaten verwendet wird, wobei zumindest ein Bauteil (7, 12 - 14) basierend auf entsprechenden Bauteildaten, die in dem Datenspeicher (10) gespeichert sind, in Anhängigkeit von zumindest einen Wartungsparameter aufgebaut werden, wobei Bauteildaten, die in dem Datenspeicher (10) gespeichert sind, über eine Steuereinheit (11) verändert werden.

10. Verfahren nach Anspruch 9, **dadurch gekennzeichnet, dass** Bauteildaten zumindest eines Bauteils (7, 12 - 14) der Anlage bestimmt und in einem Datenspeicher (10) gespeichert werden, wobei ein entsprechendes Bauteil (7, 12 - 14) über die zumindest eine Vorrichtung (2) abhängig von einem Wartungsparameter additiv gefertigt werden.

11. Verfahren nach Anspruch 9 oder 10, **dadurch gekennzeichnet, dass** der Wartungsparameter einen Zustand zumindest eines Bauteils (7, 12 - 14) der Anlage (1), insbesondere eine Betriebsfähigkeit eines entsprechenden Bauteils (7, 12 - 14) betrifft.

12. Verfahren nach einem der Ansprüche 9 bis 11, **dadurch gekennzeichnet, dass** ein Bauteil (7, 12 - 14) der Anlage (1) basierend auf den Bauteildaten über die zumindest eine Vorrichtung (2) automatisch additiv gefertigt wird, falls bestimmt wird, dass ein entsprechendes Bauteil (7, 12 - 14) der Anlage (1) funktionsunfähig ist und/oder funktionsunfähig wird.

## Revendications

1. Installation (1) comprenant au moins un appareil (2) de fabrication additive d'objets tridimensionnels (3) au moyen d'une irradiation sélective par couches successive et d'une solidification de couches d'un matériau de construction (4) qui peut être solidifié au moyen d'une source d'énergie (5), dans laquelle l'installation (1) comprend au moins un composant pouvant fonctionner (7, 12, - 14), et
une unité de détermination (9) adaptée pour déterminer des données de composant concernant au moins un composant (7, 12 - 14) de l'installation (1), dans laquelle un stockage de données (10) est fourni pour stocker les données de composants, dans laquelle l'au moins un appareil (2) est adapté pour fabriquer l'au moins un composant (7, 12, - 14) sur la base des données de composants, dans laquelle une unité de commande (11) est adaptée pour commander l'au moins un appareil (2), dans laquelle au moins un composant (7, 12 - 14) est construit sur la base de données de composant correspondantes stockées dans le stockage de données (10) en fonction d'au moins un paramètre de maintenance, dans laquelle l'unité de commande (11) est adaptée pour modifier des données de composant stockées dans le stockage de données (10).

2. Installation selon la revendication 1, **caractérisée en ce que** les données de composant sont ou comprennent
- au moins un paramètre géométrique d'au moins un composant (7, 12 - 14), et/ou
- au moins un paramètre chimique d'au moins un composant (7, 12 - 14), et/ou
- au moins un paramètre physique d'au moins un composant (7, 12 - 14).

3. Installation selon la revendication 1 ou 2, **caractérisée en ce que** l'unité de détermination (9) comprend au moins un élément de détermination optique, en particulier un scanner tridimensionnel et/ou au moins un élément de détermination à rayons X, et/ou au moins un élément de détermination tactile et/ou au moins un élément de détermination acoustique, en particulier un élément de détermination à ultrasons.

4. Installation selon l'une quelconque des revendications précédentes, **caractérisée en ce que** le stockage de données (10) est adapté pour stocker des données de composant déterminées par l'intermédiaire de l'unité de détermination (9).

5. Installation selon l'une quelconque des revendications précédentes, **caractérisée en ce que** l'unité de commande (11) est adaptée pour déterminer l'au moins un paramètre de maintenance.

6. Installation selon l'une quelconque des revendications précédentes, **caractérisée en ce que** l'au moins un paramètre de maintenance concerne un statut d'au moins un composant (7, 12 - 14) de l'installation (1), en particulier le caractère opérationnel d'un composant (7, 12, -14) correspondant.

7. Installation selon l'une quelconque des revendications précédentes, **caractérisée en ce que** l'unité de commande (11) est adaptée pour commander l'au moins un appareil (2) en fonction du paramètre de maintenance, dans laquelle l'appareil (2) est utilisé pour fabriquer au moins un composant (7, 12 - 14) en fonction du paramètre de maintenance.

8. Installation selon l'une quelconque des revendications précédentes, **caractérisée en ce que** le paramètre de maintenance concerne une panne imminente et/ou une panne actuelle de l'au moins un composant (7, 12 - 14), dans laquelle l'unité de commande (11) est adaptée pour commander l'appareil (2) en fonction du paramètre de maintenance **en ce que** le composant (7, 12 - 14) est fabriqué de manière additive, en particulier avant la panne actuelle de l'au moins un composant (7, 12 - 14).

9. Procédé de fonctionnement d'une installation (1) comprenant au moins un appareil (2) pour fabriquer de manière additive des objets tridimensionnels (3) au moyen d'une irradiation sélective par couches successive et d'une solidification de couches d'un matériau de construction (4) qui peut être solidifié au moyen d'une source d'énergie (5), dans lequel l'installation (1) comprend au moins un composant pouvant fonctionner (7, 12 - 14), dans lequel des données de composant concernant au moins un composant (7, 12-14) de l'installation (1) sont stockées dans un stockage de données (10), dans lequel l'au moins un appareil (2) est utilisé pour fabriquer l'au moins un composant (7, 12 - 14) sur la base des données de composant, dans lequel au moins un composant (7, 12 - 14) est construit sur la base de données de composant correspondantes stockées dans le stockage de données (10) en fonction d'au moins un paramètre de maintenance, dans lequel des données de composant stockées dans le stockage de données (10) sont modifiées par l'intermédiaire d'une unité de commande (11).

10. Procédé selon la revendication 9, **caractérisé en ce que** des données de composant d'au moins un composant (7, 12 - 14) de l'installation sont déterminées et stockées dans un stockage de données (10), dans lequel un composant correspondant (7, 12 - 14) est fabriqué de manière additive par l'intermédiaire de l'au moins un appareil (2) en fonction d'un paramètre de maintenance.

11. Procédé selon la revendication 9 ou 10, **caractérisé en ce que** le paramètre de maintenance concerne un statut d'au moins un composant (7, 12 -14) de l'installation (1), en particulier un caractère opérationnel d'un composant (7, 12 - 14) correspondant.

12. Procédé selon l'une quelconque des revendications 9 à 11, **caractérisé en ce qu'**un composant (7, 12 - 14) de l'installation (1) est fabriqué automatiquement de manière additive sur la base des données de composant par l'intermédiaire de l'au moins un appareil (2) si un composant (7, 12 - 14) correspondant de l'installation (1) est déterminé à devenir et/ou être inopérant.
